# EUROPEAN PATENT APPLICATION

(11) **EP 4 609 711 A1**
(43) Date of publication of application: **03.09.2025**
(21) Application number: 25160504.4
(22) Date of filing: 27.02.2025
(51) Int. Cl.: A01M 7/00

(54) **BIDIRECTIONAL BOOM HINGE FOR BOOM SPREADER**

(30) Priority: 27.02.2024 US 202463558396 P
(71) Applicant: Salford Group Inc., Salford, Ontario N0J 1W0 (CA)
(72) Inventor: STOECKLI, Peter, PUTNAM, N0L 2B0 (CA); AVERINK, John Mark, NORWICH, N0J 1P0 (CA); GRAY, Geof J., BURFURD, N0E1A0 (CA); ROZENDAAL, Jacobus A., DELHI, N0E 1H0 (CA); LEHMAN, Adam Peter, KENILWORTH, N0G 2E0 (CA); PASMA, Chad Derek, BEACHVILLE, N0J1A0 (CA); SINGH, Bikramjeet, INGERSOLL, N5C 3M7 (CA)
(74) Representative: ZBM Patents - Zea, Barlocci & Markvardsen

(57) **Abstract**

A boom spreader has at least one boom comprising a main boom section and an end boom section. A connecting plate is situated between the main boom section and the end boom section, the connecting plate rotatably mounted on the main boom section through a first pivot defining a folding axis. The end boom section is pivotably mounted on the connecting plate through a second pivot defining a breakaway axis, the breakaway axis non-perpendicular to the folding axis and tilted at an angle in a range of 1-45° from horizontal. An actuator connected to the main boom section and the connecting plates folds the end boom section between an operating and a transport position. A reset assembly connected to the end boom section and the connecting plate returns the end boom section to the operating position after the end boom section is deflected to a breakaway position.

## Description

### Field

This application relates to agriculture, in particular to a boom having a bidirectional hinge. The boom is particularly useful on a boom spreader for spreading agricultural product in a field.

### Background

Boom spreaders are used in agriculture to spread agricultural product (e.g., liquid or particulate fertilizer) to a field in rows over a large swath of terrain to minimize the amount of time required to apply the product while applying product only in the desired rows. Boom spreaders comprise at least one, and usually two, booms that extend transversely, with respect to the direction of travel of the vehicle, from a product carrying vehicle.

During operation of the boom spreader, the booms, especially the tips of the booms may encounter the ground or other obstructions. To prevent damage to the booms upon encountering the ground or other obstructions, the booms, especially end sections of the booms, may be provided with a breakaway capability whereby the booms are deflected away from the ground or other obstructions and then returned to normal operating position. Further, transport of a boom spreader on a roadway is limited by the width of the roadway, obstructions alongside the roadway (e.g., road signs and telephone poles) and the width of individual lanes on the roadway, as well as by overhead obstructions such as power lines, telephone lines and overpasses. The size of the booms makes traveling along a roadway difficult or even impossible in view of these limitations. To overcome these limitations to transport, the booms of the boom spreader may also be divided into foldable sections to reduce the overall profile of the spreader into a transport configuration.

There is a need for a simple and robust arrangement for a boom of a boom spreader that provides the ability to both fold an end boom section into a transport position and to provide a breakaway capability should the end boom section encounter the ground or other obstructions during operation in a field.

### Summary

A boom for a boom spreader comprises: a main boom section and an end boom section, a proximal end of the main boom section connectable to a vehicle and a proximal end of the end boom section pivotably connected to a distal end of the main boom section; a connecting plate situated between the distal end of the main boom section and the proximal end of the end boom section, the connecting plate rotatably mounted on the main boom section and the end boom section pivotably mounted on the connecting plate; an actuator connected to the main boom section and the connecting plate, wherein the connecting plate is rotatably connected to the main boom section through a first pivot, the first pivot defining a folding axis so that actuation of the actuator folds the end boom section between an operating position and a transport position, and a reset assembly connected to the end boom section and the connecting plate, wherein the end boom section is pivotably connected to the connecting plate through a second pivot, the second pivot defining a breakaway axis, the breakaway axis non-perpendicular to the folding axis and tilted vertically at an angle in a range of 1-45° from horizontal so that the end boom section is pivotable upwardly and rearwardly relative to the main boom section from the operating position to a breakaway position in response to the end boom section contacting ground or an obstruction during operation of the spreader and the reset assembly returns the end boom section from the breakaway position to the operating position, wherein operation of the actuator to fold the end boom section is independent of operation of the reset assembly to return the end boom section from the breakaway position.

A boom spreader comprises: a vehicle; at least one product holding container supported on the vehicle; at least one boom transversely oriented with respect to a direction of travel of the vehicle during operation of the spreader, the at least one boom having a plurality of product outlets thereon in product communication with the at least one product holding container for distributing the product to a field, a boom of the at least one boom comprising a main boom section and an end boom section, a proximal end of the main boom section connected to the vehicle and a proximal end of the end boom section pivotably connected to a distal end of the main boom section; a product distribution system in product communication with the at least one product holding container and the plurality of product outlets for delivering the product from the at least one product holding container to the plurality of product outlets; a connecting plate situated between the distal end of the main boom section and the proximal end of the end boom section, the connecting plate rotatably mounted on the main boom section and the end boom section pivotably mounted on the connecting plate; an actuator connected to the main boom section and the connecting plate, wherein the connecting plate is rotatably connected to the main boom section through a first pivot, the first pivot defining a folding axis so that actuation of the actuator folds the end boom section between an operating position and a transport position; and, a reset assembly connected to the end boom section and the connecting plate, wherein the end boom section is pivotably connected to the connecting plate through a second pivot, the second pivot defining a breakaway axis, the breakaway axis non-perpendicular to the folding axis and tilted vertically at an angle in a range of 1-45° from horizontal so that the end boom section is pivotable upwardly and rearwardly relative to the main boom section from the operating position to a breakaway position in response to the end boom section contacting ground or an obstruction during operation of the spreader and the reset assembly returns the end boom section from the breakaway position to the operating position, wherein operation of the actuator to fold the end boom section is independent of operation of the reset assembly to return the end boom section from the breakaway position.

The boom and boom spreader provide a simple and robust arrangement to both fold an end boom section into a transport position for transportation on a roadway and to provide a breakaway capability during operation in a field should the end boom section encounter the ground or obstructions while the spreader is operating.

In some embodiments, the boom spreader is configured to spread particulate product while in other embodiments, the spreader is configured to spread liquid product. An example of a boom spreader is described in United States Patent US 10,918,013 issued February 16, 2021.

In some embodiments, the folding axis is tilted at an angle in a range of 1-20° from vertical, for example 5-15° from vertical, for example about 10° from vertical. In some embodiments, the breakaway axis is tilted at an angle in a range of 20-40° from horizontal, for example about 30° from horizontal. In some embodiments, the main boom section has a longitudinal axis. During operation of the spreader, the longitudinal axis is oriented transversely with respect to the direction of travel of the spreader and the longitudinal axis is substantially horizontal (parallel to the ground). The tilt angles of the folding axis and the breakaway axis may be expressed relative to the longitudinal axis of the main boom section. Thus, the tilt angle of the folding axis is also expressed in respect of a vertical axis perpendicular to the longitudinal axis of the main boom section, while the tilt axis of the breakaway axis is also expressed in respect of a horizontal axis perpendicular to the longitudinal axis of the main boom section.

In some embodiments, the pivots on the connecting defines a single breakaway axis.

In some embodiments, an actuator is connected to the main boom section and the connecting plate, and actuation of the actuator folds the end boom section between the operating position and the transport position. In some embodiments, the actuator resists folding of the end boom section during operation of the spreader. Any suitable actuator may be used, for example a hydraulic cylinder, a pneumatic cylinder, an electrical linear actuator, a crank and linkage mechanism and the like.

In some embodiments, the boom further comprises a reset assembly for returning the end boom section from the breakaway position to the operating position. The folding of the end boom section, and therefore the actuator for folding the end boom section, is independent of the reset assembly. In some embodiments, the reset assembly further comprises a first link mounted on the end boom section, a second link pivotably mounted to the first link and pivotably mounted to the connecting plate, and a reset spring connected to the first link and connected to the second link at a position proximate to the connecting plate. The first link, the second link and the reset spring of the reset assembly cooperate to provide an initial resistive force when the end boom section is in the operating position to resist pivoting of the end boom section about the second pivot when the end boom section contacts the ground or obstruction. The reset assembly provides less resistive force to pivoting of the end boom section than the initial resistive force once the initial resistive force is overcome and the end boom section starts to pivot about the second pivot. The reset spring provides increasing resistive force as the end boom section pivots further from the operating position until the reset spring provides a return force sufficient to return the end boom section to the operating position. The reset spring may comprise any suitable spring, for example a hydraulic cylinder, a pneumatic cylinder, a coiled spring, a leaf spring and the like.

The pivoting of the end boom section reduces impact forces on the end boom section from transferring into the main boom section. The end boom section is held in place vertically by the reset assembly. The links amplify the holding force of the reset spring to keep the end boom section in the operating position during operation of the spreader. As the end boom section comes into contact with the ground or other obstructions, the holding force is overcome and the links allow the end boom section to pivot upwardly and rearwardly. As the end boom section moves away from the ground or other obstructions, the reset spring acts to pivot the end boom section back into the operating position.

In some embodiments, the boom further comprises a shock absorber to absorb forces on the boom generated by the return of the end boom section to the operating position. In some embodiments the shock absorber comprises a pneumatic cylinder, a hydraulic cylinder, one or more resilient bumpers, a coiled spring and the like or combinations thereof. In some embodiments, the shock absorber is connected to the first link and connected to the second link at a position proximate to the connecting plate. The shock absorber connected to the links helps the reset spring to control the return of the end boom section to the operating position. In some embodiments, the shock absorber comprises one or more resilient bumpers situated on the end boom section, the resilient bumpers contacting the connecting plate or the main boom section when the end boom section returns to the operating position from the breakaway position. In some embodiments, the one or more resilient bumpers comprises a suitable elastomeric material, for example natural rubber, synthetic rubber, thermoplastic elastomers and the like. In some embodiments, the shock absorber comprises a pneumatic cylinder, a hydraulic cylinder, a coiled spring or the like connected to the first link and connected to the second link and also comprises one or more resilient bumpers situated on the end boom section.

In some embodiments, the product comprises an agricultural product, for example liquid fertilizer or particulate fertilizer. In some embodiments, the spreader is an air boom spreader wherein the product distribution system comprises an air blower and a plurality of air lines in which an air flow produced by the air blower delivers the product to the plurality of product outlets.

Further features will be described or will become apparent in the course of the following detailed description. It should be understood that each feature described herein may be utilized in any combination with any one or more of the other described features, and that each feature does not necessarily rely on the presence of another feature except where evident to one of skill in the art.

### Brief Description of the Drawings

For clearer understanding, preferred embodiments will now be described in detail by way of example, with reference to the accompanying drawings, in which:
Fig. 1 depicts a front isometric view of a portion of a boom for a boom spreader where an end boom section is linked to a main boom section in a normal operating position.
Fig. 2 depicts a front view of the portion of the boom of Fig. 1.
Fig. 3 depicts a front view of the portion of the boom of Fig. 1 with an end boom section of the boom in a breakaway position.
Fig. 4 depicts a top view of the portion of the boom of Fig. 1 with an end boom section of the boom in a folded transport position.
Fig. 5 depicts an exploded front isometric view of the portion of the boom of Fig. 1.
Fig. 6 depicts an exploded rear isometric view of the portion of the boom of Fig. 1.
Fig. 7 depicts an exploded rear isometric view from a tip-end of the portion of the boom of Fig. 1.
Fig. 8 depicts a magnified rear isometric view of the portion of the boom of Fig. 1 where the end boom section is connected to a main boom section.
Fig. 9 depicts a tip-end section view of the boom of Fig. 1.
Fig. 10 depicts a boom spreader having the boom of Fig. 1 mounted thereon.

### Detailed Description

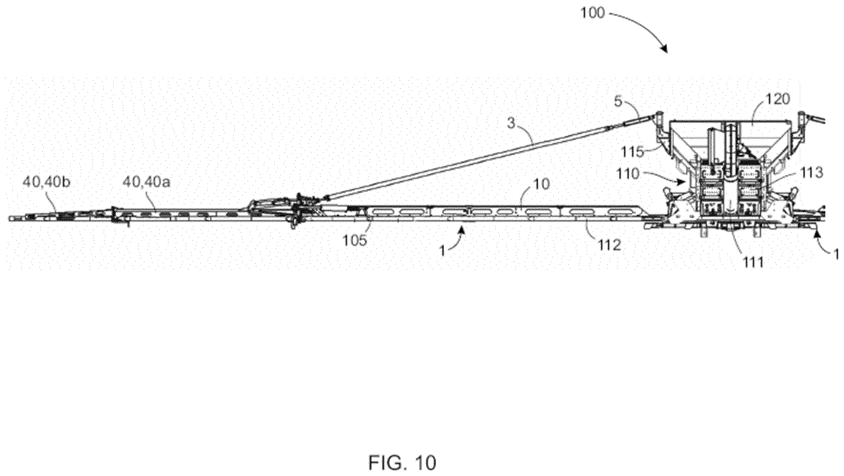

With reference to the Figures, a boom **1** for a spreader **100** comprises a main boom section **10** and an end boom section **40.** The end boom section **40** comprises a mid boom section **40a** and a tip section **40b.** The boom **1** comprises a plurality of product outlets **105** spaced-apart along a length of the boom **1** including along lengths of the main boom section **10** and the end boom section **40.** The product outlets **105** are connected by a product distribution system **110** to a product holding container **120** (e.g., a hopper or a tank) mounted on a vehicle **115** (e.g., a self-propelled vehicle or a trailer), only portions of which are shown in Fig. 10. The product distribution system **110** comprises product conveyors (e.g., conveyor belts or chains, pressurized hoses or the like) to convey the product from the product holding container **120** to a sectioning device **113** that divides a product (e.g., fertilizer) into portions for distribution into a plurality of product lines for delivery to the product outlets **105.** The spreader **100** shown in Fig. 10 is an air boom spreader used for spreading particulate material and the product distribution system **110** comprises a blower **111** and air lines **112** (only one labeled) connected to the blower **111,** the air lines **112** running along the boom 1 to deliver the product from the sectioning device **113** to the product outlets **105** (only one labeled) for distribution in a field. For a liquid product, a liquid pump can replace the blower and the product distribution system can be sealed to prevent leakage of the liquid product before being spread from the product outlets. As seen in the embodiment shown in Fig. 10, the spreader **100** comprises two identical booms **1** that extend transversely from the vehicle **115,** with respect to a direction of travel of the vehicle, on opposite sides of the vehicle **115.** To create a smaller profile for the spreader **100** to be able to drive the spreader **100** down a roadway, the main boom section **10** of each boom **1** is rotatably mounted to the vehicle **115** in a manner known in the art, for example through a hinged joint (not shown). A strut tube **3** is attached to the boom **1,** preferably on the main boom section **10** proximate a distal end of the main boom section **10.** Attached to a proximal end of the strut tube **3** is a strut cylinder **5,** which is connected to the vehicle **115.** The strut cylinder **5** is actuatable to cause rotation of the boom **1** at the hinged joint between a transport and a deployed configuration. The end boom section **40** is rotatably mounted to the main boom section **10** in a manner as described below.

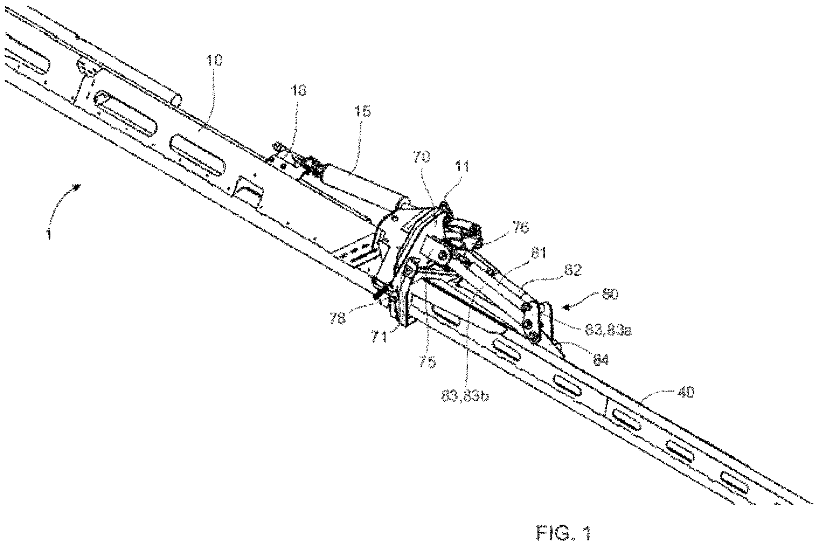

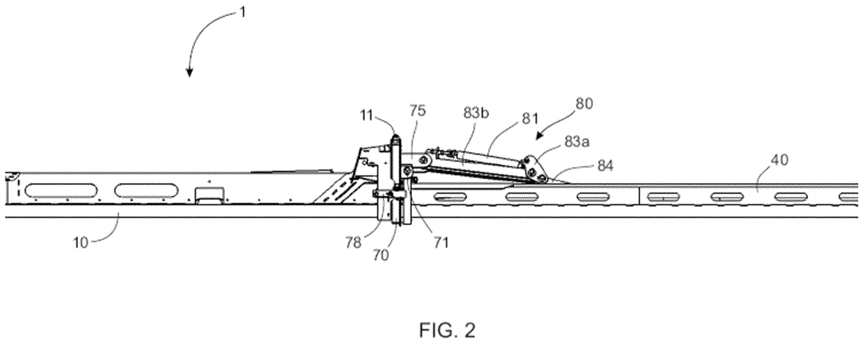

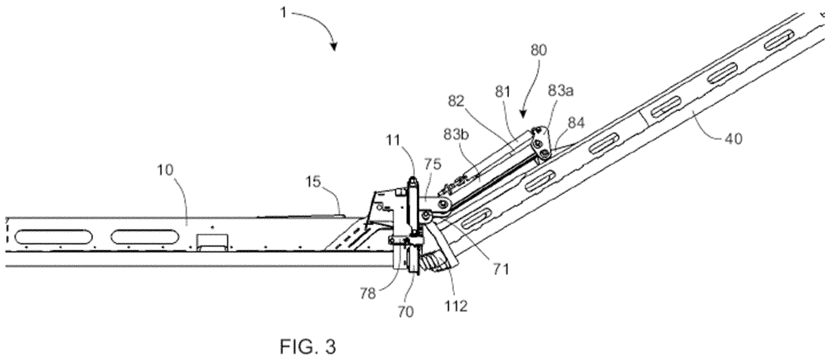

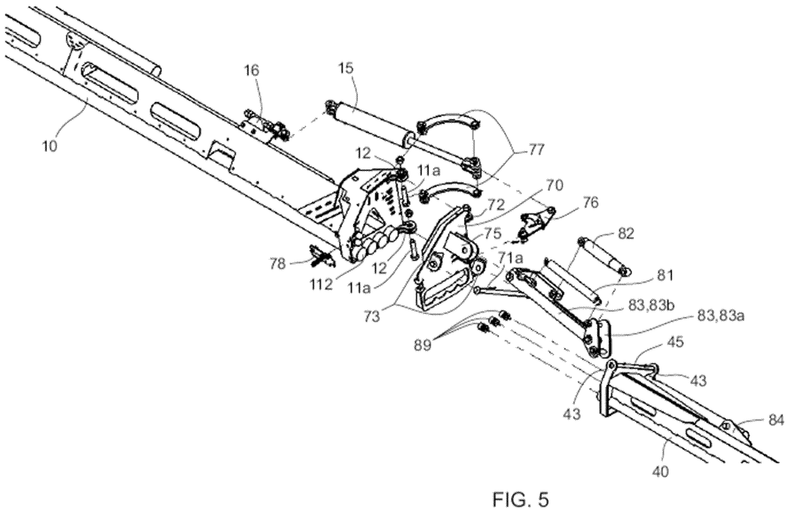

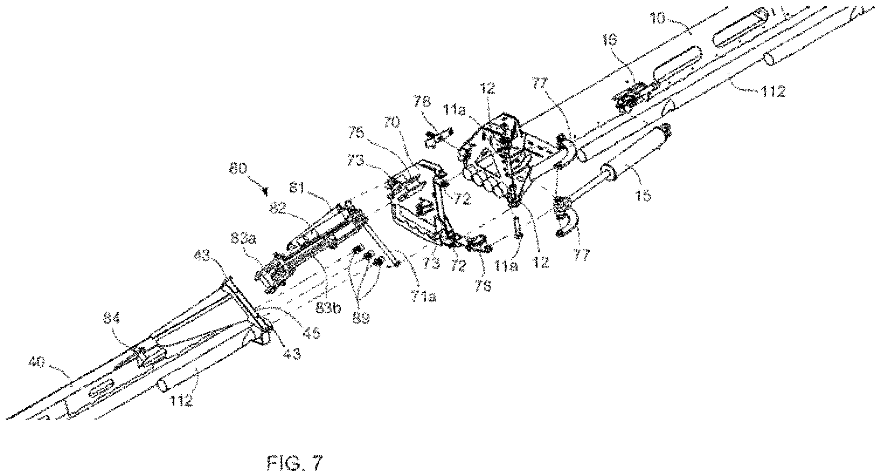

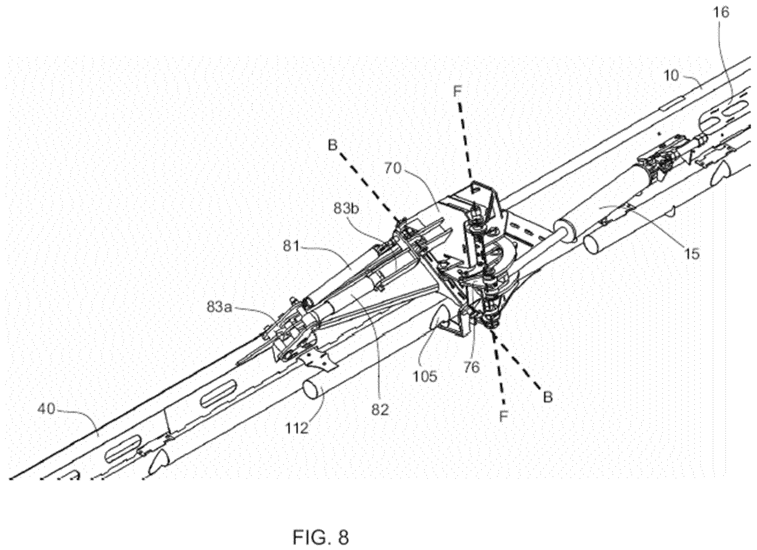

Fig. 1 to Fig. 9 illustrate how the end boom section **40** is mounted on the main boom section **10** to provide a breakaway function independent of a folding function. To this goal, the boom **1** is provided with a connecting plate **70.** The connecting plate **70** is rotatably mounted to the distal end of the main boom section **10** to provide the folding function. The end boom section **40** is pivotably mounted to the connecting plate **70** to provide the breakaway function. As seen in Fig. 5, Fig. 6 and Fig. 7, only a single connecting plate **70** is required to provide both the folding function and the breakaway function.

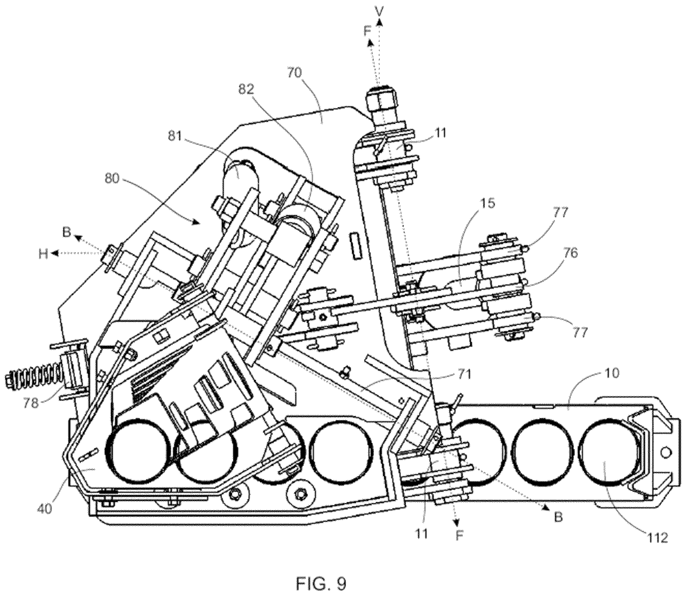

The connecting plate **70** is rotatably mounted to a distal end of the main boom section **10** at a first pivot **11** that permits rotation of the connecting plate **70** about a folding axis **F-F.** The first pivot **11** is situated along a rear edge of the connecting plate **70.** The folding axis **F-F,** and therefore the first pivot **11,** is oriented at an angle of 10° from vertical V (see Fig. 9) so that the connecting plate **70,** and therefore the end boom section **40,** is rotatable on the first pivot **11** horizontally and upwardly relative to the main boom section **10** from an operating position to a transport position and is rotatable on the first pivot **11** horizontally and downwardly from the transport position to the operating position. The first pivot **11** comprises an axially aligned pair of first pivot pins **11a** (see Fig. 5) that rotatably connect a pair of first pin receivers **72** on the connecting plate **70** to a complementary pair of pin receivers **12** on the main boom section **10.**

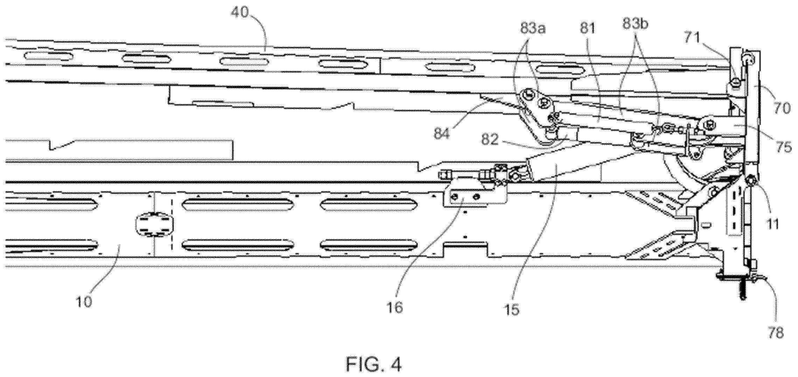

A fold actuator **15,** for example a hydraulic cylinder or the like, is pivotably connected to the main boom section **10** at first actuator mount **16** located on the main boom section **10** distant from the end of the main boom section **10.** Also, the fold actuator **15** is connected to the connecting plate **70** at a second actuator mount **76** located at the rear edge of the connecting plate **70.** The second actuator mount **76** is rotatably mounted to the connecting plate **70.** A pair of arcuate rigid links **77** are pivotably mounted to the distal end of the main boom section **10** and to the second actuator mount **76** to provide additional mechanical support during operation of the fold actuator **15.** Retraction of the fold actuator **15** causes the connecting plate **70,** and therefore the end boom section **40** mounted on the connecting plate **70,** to rotate on the first pivot **11** about the folding axis **F-F** from the operating position (see Fig. 1) to the folded transport position (see Fig. 4). Extension of the fold actuator **15** causes the connecting plate **70,** and therefore the end boom section **40** mounted on the connecting plate **70,** to rotate on the first pivot **11** about the folding axis **F-F** from the folded transport position to the operating position. In the operating position (see Fig. 1), the end boom section **40** is parallel to and extends away from the main boom section **10.** In the transport position (see Fig. 4), the end boom section **40** has been rotated through almost 180° and is parallel to and alongside the main boom section **10.** In the operating position (see Fig. 1), the fold actuator **15** resists rotation of the connecting plate **70** to help maintain the end boom section **40** in the extended operating position.

However, to further assist with maintaining the end boom section **40** in the extended operating position (i.e., to prevent folding of the end boom section **40** during a spreading operation) and to help guard against damage to and failure of the fold actuator **15,** the boom **1** is provided with a latch **78** that is operable to securely connect the connecting plate **70** to the main boom section **10.** Thus, the folding function is independent of the breakaway function. Rotation of the connecting plate **70,** and therefore the end boom section **40** mounted on the connecting plate **70,** on the first pivot **11** about the folding axis **F-F** is not involved in the breakaway function. The latch **78** is situated on the opposite side of the main boom section **10** and the connecting plate **70** from the first pivot **11** and from the second actuator mount **76,** i.e., the latch **78** is located on the side of the main boom section **10** where the connecting plate **70** opens away from the main boom section **10** during the folding operation from the operating position to the transport position. In the embodiment shown, the fold actuator **15** is situated on a rear side of the boom **1** while the latch **78** is situated on a front side of the boom **1.**

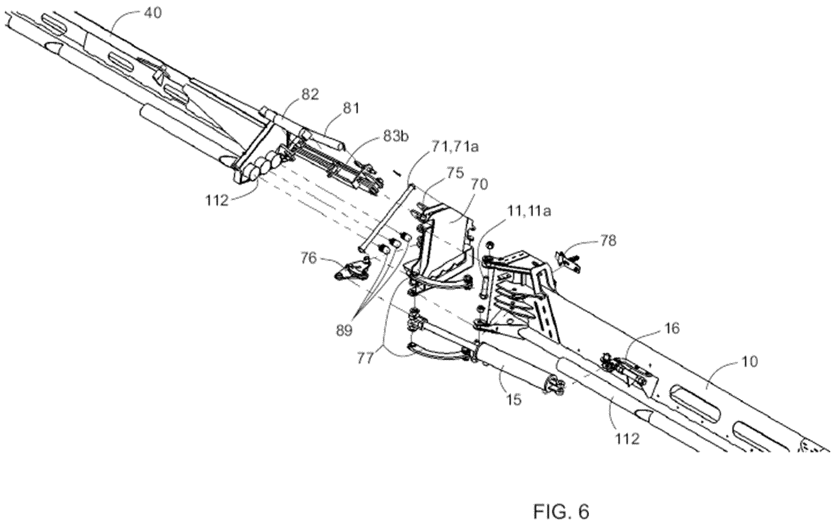

The end boom section **40** is pivotably mounted on a distal face of the connecting plate **70** at a second pivot **71** that permits pivoting of the end boom section **40** about a breakaway axis **B-B**. The second pivot **71** is oriented across the distal face of the connecting plate **70.** The breakaway axis **B-B**, and therefore the second pivot **71,** is thereby oriented at an angle of 30° from horizontal H (see Fig. 9) so that the end boom section **40** is pivotable on the second pivot **71** upwardly and rearwardly relative to the main boom section **10** from the operating position to a breakaway position in response to the end boom section **40** contacting the ground or another obstruction during operation of the spreader **100.** The second pivot **71** comprises a second pivot pin **71a** (see Fig. 5 and Fig. 6) that rotatably connects a pair of second pin receivers **73** on the distal face of the connecting plate **70** to a complementary pair of pin receivers **43** at a proximal end of the end boom section **40,** the pin receivers **43** having a sleeve **45** therebetween in which the second pivot pin **71a** is inserted.

The boom 1 further comprises a reset assembly **80** that returns the end boom section **40** to the operating position from the breakaway position after the end boom section **40** has been deflected into the breakaway position by the ground or another obstruction. The reset assembly **80** comprises a reset spring **81** (e.g., a coiled spring), and a pair of links **83,** the pair of links **83** comprising a first link **83a** and a second link **83b.** Each of the pair of links **83** comprises one or more rigid bars. The first link **83a** is pivotally mounted on the end boom section **40** through a first link mount **84** situated distally from the proximal end of the end boom section **40.** The second link **83b** is pivotally mounted on the first link **83a,** and the second link **83b** is also pivotally mounted on the distal face of the connecting plate **70** through a second link mount **75.** Thus, the second link **83b** extends between the first link **83a** and the connecting plate **70.** The reset spring **81** is pivotally connected to the first link **83a.** The reset spring **81** is also pivotally connected to the second link **83b** at a position on the second link **83b** proximate to the connecting plate **70.** The pair of links **83** and the reset spring **81** cooperate to provide an initial resistive force when the end boom section **40** is in the operating position to resist pivoting of the end boom section **40** on the second pivot **71** about the breakaway axis **B-B** when the end boom section **40** contacts the ground or another obstruction. The reset assembly **80** provides less resistive force to pivoting of the end boom section **40** than the initial resistive force once the initial resistive force is overcome and the end boom section **40** starts to pivot on the second pivot **71.** The reset spring **81** provides increasing resistive force as the end boom section **40** pivots further from the operating position until the reset spring **81** provides a return force sufficient to return the end boom section **40** to the operating position. In the absence of the pair of links **83,** a reset assembly having only a reset spring would provide an initial resistive force and the resistive force would only become greater as the end boom section **40** pivots further from the operating position. Such an arrangement without the pair of links **83** would be useless, or at best inefficient, at allowing the end boom section **40** to pivot away from the ground or another obstruction when the end boom section **40** encounters the ground or another obstruction. The use of the pair of links **83** with the resent spring **81** results in an initial locking of the end boom section **40** by the initial resistive force due to the pair of links **83** followed by a temporary lessening of the resistive force after the initial resistive force is overcome so that the end boom section **40** can pivot further away from the operating position to provide sufficient time for the end boom section **40** to clear the ground or other obstruction before returning to the operating position by the action of the reset spring **81.** Thus, the pair of links **83** of the reset assembly **80** provides a mechanical advantage to keep the end boom section **40** straight and locked in the operating position during operation of the spreader **100,** but when the end boom section **40** contacts the ground or another obstruction with sufficient force to overcome the mechanical advantage, the end boom section **40** can pivot further away before being returned to the operating position by the reset spring **81.**

The forces involved with returning the end boom section **40** from the breakaway position to the operating position can result in damage to the boom **1.** To mitigate against this potential problem, the boom **1** further comprises shock absorbers. A first shock absorber **82** (e.g., a pneumatic spring) is pivotably connected to the first link **83a.** The first shock absorber **82** is also pivotally connected to the second link **83b** at a position on the second link **83b** proximate to the connecting plate **70.** The first shock absorber **82** absorbs the forces generated when the reset spring **81** pivots the end boom section **40** from the breakaway position to the operating position so that the proximal end of the end boom section **40** does not strike the connecting plate **70** too vigorously. In addition, a second shock absorber comprising one or more rubber bumpers, in this embodiment three rubber bumpers **89,** is attached to an end face of the proximal end of the end boom section **40** to further cushion contact between the end boom section **40** and the connecting plate **70** when the end boom section **40** returns to the operating position.

The novel features will become apparent to those of skill in the art upon examination of the description. It should be understood, however, that the scope of the claims should not be limited by the embodiments but should be given the broadest interpretation consistent with the wording of the claims and the specification as a whole.

## Claims

1. A boom spreader comprising:
a vehicle;
at least one product holding container supported on the vehicle;
at least one boom transversely oriented with respect to a direction of travel of the vehicle during operation of the spreader, the at least one boom having a plurality of product outlets thereon in product communication with the at least one product holding container for distributing the product to a field, a boom of the at least one boom comprising a main boom section and an end boom section, a proximal end of the main boom section connected to the vehicle and a proximal end of the end boom section pivotably connected to a distal end of the main boom section;
a product distribution system in product communication with the at least one product holding container and the plurality of product outlets for delivering the product from the at least one product holding container to the plurality of product outlets;
a connecting plate situated between the distal end of the main boom section and the proximal end of the end boom section, the connecting plate rotatably mounted on the main boom section and the end boom section pivotably mounted on the connecting plate;
an actuator connected to the main boom section and the connecting plate, wherein the connecting plate is rotatably connected to the main boom section through a first pivot, the first pivot defining a folding axis so that actuation of the actuator folds the end boom section between an operating position and a transport position; and,
a reset assembly connected to the end boom section and the connecting plate, wherein the end boom section is pivotably connected to the connecting plate through a second pivot, the second pivot defining a breakaway axis, the breakaway axis non-perpendicular to the folding axis and tilted vertically at an angle in a range of 1-45o from horizontal so that the end boom section is pivotable upwardly and rearwardly relative to the main boom section from the operating position to a breakaway position in response to the end boom section contacting ground or an obstruction during operation of the spreader and the reset assembly returns the end boom section from the breakaway position to the operating position,
wherein operation of the actuator to fold the end boom section is independent of operation of the reset assembly to return the end boom section from the breakaway position.

2. The spreader of claim 1, wherein the folding axis is tilted horizontally at an angle in a range of 1-20° from vertical.

3. The spreader of claim 1, wherein the folding axis is tilted at an angle in a range of 5-15°, preferably about 10°, from vertical and the breakaway axis is tilted at an angle in a range of 20-40°, preferably about 30°, from horizontal.

4. The spreader of any one of claims 1 to 3, wherein the actuator, preferably a hydraulic cylinder, resists folding of the end boom section during operation of the spreader.

5. The spreader of any one of claims 1 to 4, further comprising a latch connectable between the main boom section and the connecting plate to help prevent folding of the end boom section during operation of the spreader.

6. The spreader of any one of claims 1 to 5, wherein the reset assembly comprises:
a first link mounted on the end boom section;
a second link pivotably mounted to the first link and pivotably mounted to the connecting plate; and,
a reset spring, preferably a coiled spring, connected to the first link and connected to the second link at a position proximate to the connecting plate,
wherein the first link, the second link and the reset spring of the reset assembly cooperate to provide an initial resistive force when the end boom section is in the operating position to resist pivoting of the end boom section about the second pivot when the end boom section contacts the ground or obstruction,
wherein the reset assembly provides less resistive force to pivoting of the end boom section than the initial resistive force once the initial resistive force is overcome and the end boom section starts to pivot about the second pivot, and
wherein the reset spring provides increasing resistive force as the end boom section pivots further from the operating position until the reset spring provides a return force sufficient to return the end boom section to the operating position.

7. The spreader of claim 6, wherein the boom further comprises a shock absorber, preferably a pneumatic cylinder, connected to the first link and connected to the second link at a position proximate to the connecting plate to absorb forces on the boom generated by the return of the end boom section to the operating position.

8. The spreader of any one of claims 1 to 7, further comprising one or more resilient bumpers situated on the end boom section, the resilient bumpers contacting the connecting plate or the main boom section when the end boom section returns to the operating position from the breakaway position, the resilient bumpers absorbing forces on the boom generated by the return of the end boom section to the operating position.

9. The spreader of any one of claims 1 to 8, wherein the product comprises liquid or particulate fertilizer.

10. The spreader of any one of claims 1 to 9, wherein the spreader is an air boom spreader wherein the product distribution system comprises an air blower and a plurality of air lines in which an air flow produced by the air blower delivers the product to the plurality of product outlets.

11. A boom for a boom spreader, the boom comprising:
a main boom section and an end boom section, a proximal end of the main boom section connectable to a vehicle and a proximal end of the end boom section pivotably connected to a distal end of the main boom section;
a connecting plate situated between the distal end of the main boom section and the proximal end of the end boom section, the connecting plate rotatably mounted on the main boom section and the end boom section pivotably mounted on the connecting plate;
an actuator connected to the main boom section and the connecting plate, wherein the connecting plate is rotatably connected to the main boom section through a first pivot, the first pivot defining a folding axis so that actuation of the actuator folds the end boom section between an operating position and a transport position, and
a reset assembly connected to the end boom section and the connecting plate, wherein the end boom section is pivotably connected to the connecting plate through a second pivot, the second pivot defining a breakaway axis, the breakaway axis non-perpendicular to the folding axis and tilted vertically at an angle in a range of 1-45o from horizontal so that the end boom section is pivotable upwardly and rearwardly relative to the main boom section from the operating position to a breakaway position in response to the end boom section contacting ground or an obstruction during operation of the spreader and the reset assembly returns the end boom section from the breakaway position to the operating position,
wherein operation of the actuator to fold the end boom section is independent of operation of the reset assembly to return the end boom section from the breakaway position.

12. The boom of claim 11, wherein the actuator resists folding of the end boom section during use of the boom.

13. The boom of claim 11 or claim 12, further comprising a latch connectable between the main boom section and the connecting plate to help prevent folding of the end boom section during operation of the spreader.

14. The boom of any one of claims 11 to 13, wherein the reset assembly comprises:
a first link mounted on the end boom section;
a second link pivotably mounted to the first link and pivotably mounted to the connecting plate; and,
a reset spring connected to the first link and connected to the second link at a position proximate to the connecting plate,
wherein the first link, the second link and the reset spring of the resent assembly cooperate to provide an initial resistive force when the end boom section is in the operating position to resist pivoting of the end boom section about the second pivot when the end boom section contacts ground or an obstruction,
wherein the reset assembly provides less resistive force to pivoting of the end boom section than the initial resistive force once the initial resistive force is overcome and the end boom section starts to pivot about the second pivot, and
wherein the reset spring provides increasing resistive force as the end boom section pivots further from the operating position until the reset spring provides a return force sufficient to return the end boom section to the operating position.

15. The spreader of claim 14, wherein the boom further comprises a shock absorber connected to the first link and connected to the second link at a position proximate to the connecting plate to absorb forces on the boom generated by the return of the end boom section to the operating position.

16. The boom of any one of claims 11 to 15, further comprising one or more resilient bumpers situated on the end boom section, the resilient bumpers contacting the connecting plate or the main boom section when the end boom section returns to the operating position from the breakaway position, the resilient bumpers absorbing forces on the boom generated by the return of the end boom section to the operating position.
